# EUROPEAN PATENT APPLICATION

(11) **EP 1 344 698 A2**
(43) Date of publication of application: **17.09.2003**
(21) Application number: 03251528.0
(22) Date of filing: 13.03.2003
(51) Int. Cl.: B60S 1/38

(54) **Improvements relating to wiper blade rubbers**

(30) Priority: 16.03.2002 GB 0206230
(71) Applicant: Trico Products Corporation, Rochester Hills, MI 48309 (US)
(72) Inventor: Pathmanathan, Mahesan, Cwmbran, Gwent NP44 6EX (GB)
(74) Representative: James, Michael John Gwynne

(57) **Abstract**

A wiper blade rubber has a head portion 1 and a wiper body 2 provided with a tip 3 which will carry out the wiping function. A neck 4 is defined by grooves 5 cut into both sides of the wiper blade rubber. In order to increase the length of the neck 4, portions of the wiper blade rubber are cut away at 6 into the head portion 1.

## Description

A conventional wiper blade rubber incorporates a head portion which will be mounted into a wiper blade harness and a wiper body which will contact the screen of a vehicle. It is necessary to provide for flexing of the wiper body with respect to the head portion so that the wiper blade adopts the correct angle with respect to the windscreen as it wipes first in one direction and then the other. Accordingly a neck portion is defined by grooves between the head portion and the wiper body and the wiper body flexes about that neck.

When the wiper blade has been inactive for a period of time it can suffer from permanent set characteristics whereby it tends to favour one attitude of bend rather than the other. The can result in inconsistent wiping of the windscreen in one direction as opposed to the other. It is an object of this invention to alleviate the undesirable effects resulting from such permanent set characteristics.

Accordingly this invention provides a wiper blade rubber having a head portion and a wiper body connected by a neck portion defined by grooves set into the sides of the wiper blade, wherein the length of the neck portion is increased with respect to the width of the grooves by cut-away parts of the head portion and/or the wiper body, in the region of the neck portion.

By this means the length of the neck is increased so that greater flexibility is provided to minimise any effect caused by permanent set characteristics. Nevertheless the strength of the head portion and of the wiper body are not significantly prejudiced.

It is preferred that the cut-away parts are formed into the head portion of the wiper blade rubber. Of course the effect can be enhanced by cutting away parts of both the head portion and the wiper body. It is feasible that the cut-away parts could be created just on one side of the neck portion, but this could lead to an imbalance and so it is preferred that the cut-away parts should be created on both sides of the neck portion.

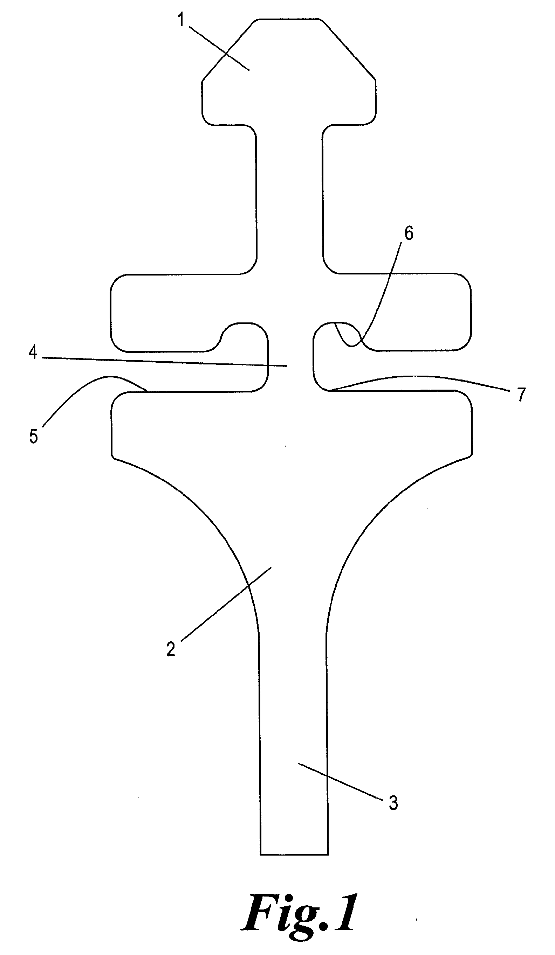

The invention may be performed in various ways and a preferred embodiment thereof will now be described with reference to the accompanying Figure 1 which illustrates a wiper blade rubber of this invention.

The wiper blade rubber shown in Figure 1 incorporates a head portion 1 (which will be mounted into a wiper blade harness) and a wiper body 2 which carries a tip 3 which will carry out the wiping function. A neck 4 is defined by grooves 5 cut into both sides of the wiper blade rubber. In order to increase the length of the neck 4 portions of the wiper blade rubber are cut away at 6 into the head portion 1. A similar effect could be achieved by cutting into the wiper body 2 at 7 in order to increase still further the length of the neck 4.

## Claims

1. A wiper blade rubber having a head portion and a wiper body connected by a neck portion defined by grooves set into the sides of the wiper blade, wherein the length of the neck portion is increased with respect to the width of the grooves by cut-away parts of the head portion and/or the wiper body, in the region of the neck portion.

2. A wiper blade rubber according to claim 1, wherein the cut-away parts are formed into the head portion of the wiper blade rubber.

3. A wiper blade rubber according to claim 1, wherein parts of both the head portion and the wiper body are cut away.

4. A wiper blade rubber according to any one of claims 1 to 3, wherein the cut-away parts are created on both sides of the neck portion.

5. A wiper blade rubber according to any one of claims claim 1 to 3, wherein the cut-away parts are created just on one side of the neck portion.

6. A wiper blade rubber substantially as herein described, with reference to the accompanying drawings.

7. Any novel combination of features of a wiper blade rubber as described herein, and/or as illustrated in the accompanying drawings.
